## Europäisches Patentamt
## European Patent Office
## Office européen des brevets

(19)

(11) Publication number: **0 242 194**
**B1**

---

(12) # EUROPEAN PATENT SPECIFICATION

(45) Date of publication of the patent specification:
**08.08.90**

(51) Int. Cl.⁵: **B65G 65/20, B65G 67/60**

(21) Application number: **87303301.3**

(22) Date of filing: **15.04.87**

---

(54) **Material handling systems.**

---

(30) Priority: **18.04.86  GB 8609502**

(43) Date of publication of application:
**21.10.87 Bulletin 87/43**

(45) Publication of the grant of the patent:
**08.08.90 Bulletin 90/32**

(84) Designated Contracting States:
**DE FR IT NL SE**

(56) References cited:
**WO-A-86/00873**
**DE-A- 2 414 583**
**DE-A- 3 043 448**
**US-A- 3 616 890**

(73) Proprietor: **GEC ALSTHOM MECHANICAL HANDLING
LIMITED, Cambridge Road, Whetstone Leicester
LE8 3LH(GB)**

(72) Inventor: **Gerrish, Gordon John, Tamrisk 184A Woodrow
Road, Melksham Wiltshire(GB)**
Inventor: **Smallwood, John Michael Terence, 21 Napier
Road, Weston Bath Avon(GB)**

(74) Representative: **Kirby, Harold Victor Albert, The General
Electric Company, p.l.c. Central Patent Department
Wembley Office GEC Research Centre East Lane,
Wembley Middlesex HA9 7PP(GB)**

---

## Description

This invention relates to material handling systems of the kind comprising a cutter/feeder in the form of a hollow drum having a series of blades spaced around it, and arranged to be supported for rotation about a nominally vertical axis, the blades being shaped so as to cut into an approximately vertical face of non- free-flowing material, such as coal, iron ore pellets and concentrates, phosphate, soya meal and tapioca, and to feed such material in to an elevator, for example of the bucket type, having its lower end within the drum, such as are for example described in WO/86/00873.

The invention relates especially to land based or ship mounted continuous unloaders such as are commonly used to discharge such materials from ships, barges, silos, storage containers, stockyards and the like, but may also be employed for other applications where there is a requirement to cut, collect and feed material from an approximately vertical face, such as mineral reclaim in open cast mining.

According to the invention a material handling system of the kind comprising a cutter/feeder in the form of a hollow drum having a series of blades spaced around it, and arranged to be supported for rotation about a nominally vertical axis, the blades being shaped so as to cut into an approximately vertical face of non-free-flowing material and to feed such material into an elevator having its lower end within the drum, and in which the drum incorporates an annular blade support from which the blades depend, characterised in that the blades are pivoted to the support in a manner such that the blades extend rigidly downwards in a cutting position on rotation of the drum in the cutting direction, the blades being normally held in the cutting position under gravity, with a projection rearwardly of the pivot held against a stop, the engagement of the blades with material being handled, when the drum is rotated in the cutting direction, causing the projection to be urged more firmly against the stop, but the pivoting arrangement being such that the blades are free to pivot upwards, so as to ride over the material out of the cutting position, when the drum is rotated in the reverse direction.

Such an arrangement is capable of cutting, collecting and feeding non- free-flowing material into the boot of a bucket elevator or similar elevating device employed as a continuous unloader, and can be fabricated in the form of a light and simple structure compared with conventional bucket wheel unloaders having a similar handling capacity. Moreover the drum is operable in any direction of travel, without the complication of rotating the elevator, and is capable of handling a large range of materials, and materials with difficult handling properties, by selection of appropriate operating speeds and blade profiles.

The pivoting of the blades is conveniently such that the blades are normally held in the cutting position under gravity, with a projection rearwardly of the pivot held against a stop, the engagement of the blades with material being handled, when the drum is rotated in the cutting direction, causing the projection to be urged more firmly against the stop. However when the drum is rotated in the reverse direction the blades will be caused to pivot upwards and ride over the material. This has the advantage, when used with a bucket elevator, that by simply reversing the direction of rotation of the drum the elevator buckets can be used to discharge the residue of material by movement of the elevator in an appropriate direction, as the blades will lift above the lowermost bucket position.

In some cases means may be provided for positively rotating the blades about their pivots into a raised, non-operative position.

Conveniently the drum is arranged to be driven by one or more reversible electric or hydraulic motors.

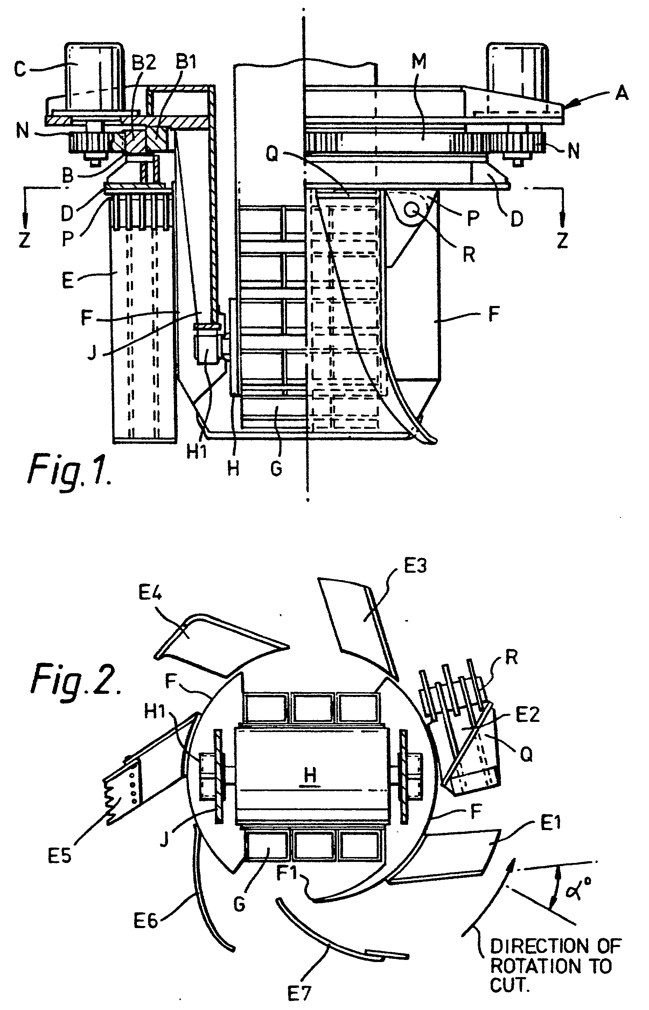

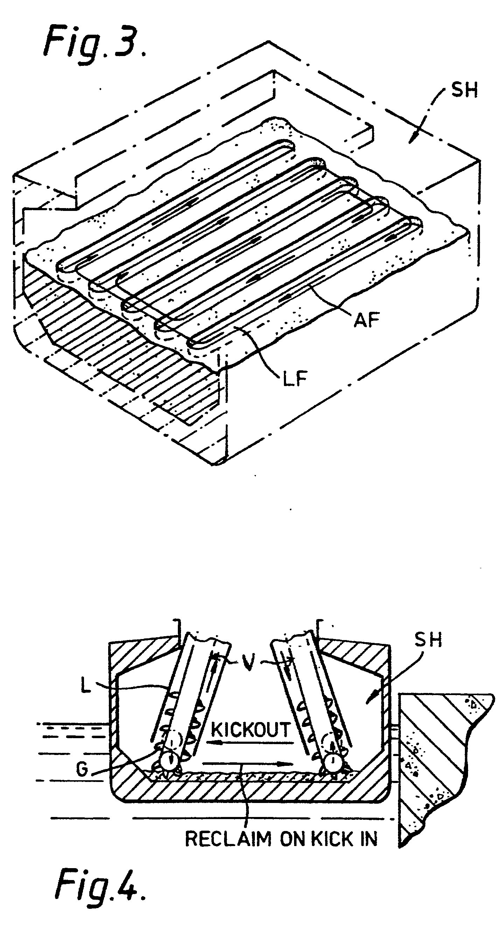

One embodiment of the invention, and various modifications thereof, will now be described by way of example with reference to Figures 1 to 4 of the accompanying schematic drawings, in which Figure 1 represents a side elevation in part section of a cutter/feeder drum and the lower end of an associated bucket elevator, Figure 2 illustrates a plan section along the line Z–Z of Figure 1, but showing different forms of blade configurations, and Figures 3 and 4 illustrate methods of utilising a material handling system in accordance with the invention.

Referring first to Figure 1, this shows a stationary, ring-shaped, mounting A attached to the boot, or lower end, of a marine leg elevator structure L (Figure 4). Below the mounting A there is carried a slew ring bearing B with the inner race B1 being fixed to the mounting A and the outer race B2 having an external gear M, and being arranged to be driven in use by variable speed, reversible drive motors C, which may be hydraulic or electric, through gear wheels N.

A further ring D is attached to the outer race B2 of the slew ring bearing Band carries brackets P, to each of which is pivotally fitted a respective cutter blade E, the blades being equally spaced around the slew ring bearing. The bottom edges of the blades E may be curved to form cutting edges to assist digging when initially inserting the cutter into material, the lower parts of the blades being radiused or raked to lift the material. In plan section the blades are inclined at an appropriate cutting angle so that on rotation of the drum in the cutting direction, they are able to cut into an approximately vertical face of non- free-flowing material and feed it into the buckets G of a bucket elevator V, within the boot of the marine leg L, the lower end of the bucket elevator passing around a pulley H which is rotatably supported in bearings H1 carried by mounting arms J depending downwards from the mounting A.

A stationary cutter shield F, carried by the mounting A at each side of the elevator, serves to protect the elevator bearings H1, and one side of the shield is shaped at one edge F1 on the up side of the elevator, as shown in Figure 2 to provide a collecting plough for directing material into the buckets G.

The pivoting of the blades E is such that when the drum is rotated in the cutting direction plates Q which extend rearwards from the top edges of the blades, and lie behind the respective pivots R are urged against the bracket support ring D, which therefore ensures that the blades are held rigidly in the cutting position, whereas if the drum is rotated in the reverse direction the blades are free to pivot upwards so as to ride above any material in their path.

In Figure 1 the blades E are shown radial to the centre line of the cutter for clarity whereas, as illustrated in Figure 2, the blades would be arranged at a cutting angle $\alpha°$ to suit the shearing properties of the material being handled. Thus for handling coal a cutting angle of approximately 60° has been found to be satisfactory.

Figure 2 also illustrates different forms of cutter blades which could be used for different applications, although it will be appreciated that for any one drum the blades will normally all have the same shape. The blades are conveniently formed from wear resistant steel as is customary with cutter/feeder drums, and, for handling abrasive materials, may be equipped with reinforced edges or renewable hardened cutting teeth.

Thus the blades E1, E2 and E3 are standard straight blades, part of the blade pivot assembly associated with the blade E2 also being illustrated. The blade E4 is a straight blade with a curved cutting edge, and the blade E5 is a straight blade fitted with hardened cutting teeth.

The blades E6 and E7 are both curved blades with un-raked lower parts, the blade E7 having hardened cutting teeth as its outer edge.

On the discharge of, say, a ship's hold SH by manipulation of the elevator kick angle the cutter drum is conveniently arranged to cut a series of longitudinal furrows LF by long travelling in each direction, as indicated by the arrows AF in Figure 3, to ensure the ship stays on level trim. As the cutter drum is rotatable about a nominally vertical axis it will operate to feed material into the bucket elevator in both directions of travel, and indeed in any direction of travel.

For the final clean up, the cutter facility of the drum would be dispensed with by reversing the direction of rotation, thereby causing the blades E to hinge upwards over the material and thus to rise above the lowest bucket position. With assistance from a mechanical shovel or bulldozer the residue of material can be discharged by kicking the elevator L in across the hold 3H, lifting at kick in position, kicking out, lowering and repeating sequence.

In operation under given travel speed and revolutions per minute as the feeder advances into material it will :

    (i)   cut into the material.
    (ii)   collect the material.
    (iii)  feed the material into the upwardly moving buckets G within the elevator boot, using the face of previously cut material as a back up face.

Optimum discharge performance will be governed by correct selection of travel speed, the speed of rotation of the drum and the depth of cut (which is normally full depth of feeder blades). For efficient feed of the bucket elevator it is necessary to bury the boot above the boot pulley H. As an additional feature, to achieve optimum discharge performance, the speed of rotation of the drum is preferably arranged to be controlled in dependence upon changes in the long travel speed and/or the required handling rate.

Whilst the method of operation described above refers to discharge of a ship's hold, the same principles apply to other bulk storage containers and the like.

As a result of their cutting action the blades will relieve the pressure on the boot in any direction of travel.

It will also be apparent that the drum is capable of operating on a vertical face. Moreover by the addition of low rake angle, approximately horizontal, cutters fixed to the blades E the drum can be used as an auger on materials up to a given density.

## Claims

1. A material handling system of the kind comprising a cutter/feeder in the form of a hollow drum having a series of blades (E) spaced around it, and arranged to be supported for rotation about a nominally vertical axis, the blades (E) being shaped so as to cut into an approximately vertical face of non-freeflowing material and to feed such material into an elevator having its lower end within the drum, and in which the drum incorporates an annular blade support (D) from which the blades (E) depend, characterised in that the blades (E) are pivoted to the support in a manner such that the blades (E) extend rigidly downwards in a cutting position on rotation of the drum in the cutting direction, the blades (E) being normally held in the cutting position under gravity, with a projection rearwardly of the pivot (R) held against a stop, the engagement of the blades (E) with material being handled, when the drum is rotated in the cutting direction, causing the projection to be urged more firmly against the stop, but the pivoting arrangement being such that the blades (E) are free to pivot upwards, so as to ride over the material out of the cutting position, when the drum is rotated in the reverse direction.

2. A material handling system according to Claim 1 including also means for positively rotating the blades (E) about their pivots (R) into a raised, nonoperative position.

3. A material handling system according to Claim 1 or 2, wherein the drum is arranged to be driven by one or more reversible electric or hydraulic motors (C).

4. A material handling system according to Claim 3 wherein the electric or hydraulic motor or motors(C) is/are controllable so as to vary the speed of rotation of the drum.

5. A rotary cutter drum for a material handling system according to Claim 1 comprising a support ring (D) arranged to be mounted with its axis approximately vertical and rotatable about said axis, and a plurality of blades (E) equally spaced around and projecting downwards from the ring (D), characterised in that the blades (E) are pivotally supported by the ring at their upper ends and hanging downwards from the ring (D) under gravity, the blades (E) being pivotable upwards about respective radii in one direction, but are prevented from pivoting upwards in the opposite direction by means of a projection which engages a stop.

## Revendications

1. Installation de manutention de matériaux du type qui comprend un appareil de désagrégation-chargement sous forme d'un tambour creux ayant une série de couteaux (E) espacés autour de lui et destiné à être supporté afin qu'il puisse tourner autour d'un axe nominalement vertical, les couteaux (E) ayant une configuration telle qu'ils provoquent la désagrégation d'une face approximativement verticale d'un matériau non fluide et chargent ce matériau dans un élévateur dont l'extrémité inférieure se trouve dans le tambour, et dans laquelle le tambour comporte un support annulaire (D) dont dépassent les couteaux (E), caractérisée en ce que les couteaux (E) sont articulés sur le support de manière que les couteaux (E) dépassent rigidement vers le bas en position de désagrégation lors de la rotation du tambour dans le sens de désagrégation, les couteaux (E) étant normalement maintenus en position de désagrégation sous l'action de la pesanteur, une saillie placée en arrière du pivot (R) étant maintenue contre une butée, la coopération des couteaux (E) avec le matériau manipulé, lorsque le tambour tourne dans le sens de désagrégation, provoquant une application plus ferme de la saillie contre la butée, mais le montage pivotant étant tel que les couteaux (E) sont libres de pivoter vers le haut et ainsi de se déplacer sur le matériau en quittant la position de désagrégation lorsque le tambour tourne dans l'autre sens.

2. Installation de manutention de matériaux selon la revendication 1, comprenant aussi un dispositif destiné à entraîner positivement en rotation les couteaux (E) autour de leur pivot (R) en position levée de repos.

3. Installation de manutention de matériaux selon la revendication 1 ou 2, dans laquelle le tambour est destiné à être entraîné par un ou plusieurs moteurs réversibles hydrauliques ou électriques (C).

4. Installation de manutention de matériaux selon la revendication 3, dans laquelle le moteur ou les moteurs électriques ou hydrauliques (C) peuvent être commandés afin qu'ils fassent varier la vitesse de rotation du tambour.

5. Tambour rotatif de désagrégation destiné à une installation de manutention de matériaux selon la revendication 1, comprenant une bague de support (D) destinée à être montée avec un axe approximativement vertical et à tourner autour de cet axe, et plusieurs couteaux (E) régulièrement espacés autour de la bague (D) et dépassant sous celle-ci, caractérisé en ce que les couteaux (E) sont supportés sous forme articulée par la bague à leurs extrémités supérieures et sont suspendus au-dessous de la bague (D) sous l'action des forces de pesanteur, les couteaux (E) pouvant pivoter vers le haut en arc de cercle dans un sens mais ne pouvant pas pivoter vers le haut dans l'autre sens du fait du contact d'une saillie avec une butée.

## Patentansprüche

1. Materialfördersystem mit einer Schneideinrichtung/Vorschubeinrichtung in Form einer hohlen Trommel mit einer Reihe von Schaufeln (E), die um die Trommel beabstandet und zur Drehung um eine nominal vertikale Achse gehalten sind, wobei die Schaufeln (E) so geformt sind, daß sie in eine etwa vertikale Fläche eines nicht frei fließenden Materials schneiden und das Material einem Förderwerk zuführen, dessen unteres Ende innerhalb der Trommel liegt, wobei die Trommel eine ringförmige Schaufelhalterung (D) aufweist, von der die Schaufeln (6) herabhängen, dadurch gekennzeichnet, daß die Schaufeln (E) an der Halterung auf solche Weise angelenkt sind, daß sich die Schaufeln (E) bei Drehung der Trommel in Schneidrichtung starr nach unten in eine Schneidposition erstrecken, daß die Schaufeln (E) unter Schwerkraft normal in der Schneidposition gehalten sind, wobei ein Vorsprung hinter dem Anlenkpunkt (R) an einem Anschlag gehalten ist, daß der Eingriff der Schaufeln (E) in das zu fördernde Material bei Drehung der Trommel in Schneidrichtung bewirkt, daß der Vorsprung noch fester gegen den Anschlag gezwängt wird, und daß die Gelenkanordnung derart ist, daß die Schaufeln (E) frei nach oben schwenken und über das Material aus der Schneidposition heraus gleiten, wenn die Trommel in Umkehrrichtung gedreht wird.

2. Materialfördersystem nach Anspruch 1, ferner gekennzeichnet durch eine Einrichtung zum zwangsweisen Drehen der Schaufeln (E) um ihre Anlenkpunkte (R) in eine angehobene, nicht betriebsfähige Position.

3. Materialfördersystem nach Anspruch 1 oder 2, dadurch gekennzeichnet, daß die Trommel von einem oder mehreren umkehrbaren elektrischen oder hydraulischen Motoren (C) antreibbar ist.

4. Materialfördersystem nach Anspruch 3, dadurch gekennzeichnet, daß der oder die elektrischen oder hydraulischen Motoren (C) so steuerbar ist//sind, daß die Drehgeschwindigkeit der Trommel variierbar ist.

5. Drehbare Schneidtrommel für ein Materialfördersystem nach Anspruch 1 mit einem Haltering (D), der mit annähernd vertikaler Achse befestigt und um diese Achse drehbar ist, und mit mehreren Schaufeln (E), die gleichmäßig um den Ring (D) beabstandet sind und von diesem nach unten vorstehen, dadurch gekennzeichnet, daß die Schaufeln (E) an ihren oberen Enden schwenkbar von dem Ring gehalten sind und unter Schwerkraft von dem Ring (D) nach unten hängen, wobei die Schaufeln (E) um ihre jeweiligen Radien in einer Richtung nach oben schwenkbar sind, während sie von einem Vorsprung, der an einem Anschlag anliegt, gehindert sind, in der entgegengesetzten Richtung nach oben zu schwenken.

Fig.1.

Fig.2.

DIRECTION OF ROTATION TO CUT.

## Fig.3.

SH

AF

LF

## Fig.4.

SH

V

L

KICKOUT

G

RECLAIM ON KICK IN